# EUROPEAN PATENT APPLICATION

(11) **EP 4 786 132 A1**
(43) Date of publication of application: **05.08.2026**
(21) Application number: 25762360.3
(22) Date of filing: 26.02.2025
(51) Int. Cl.: B29C 43/02, B29C 43/14, B29C 43/36, B29C 43/40, H01M 50/105, B29D 99/00, B29L 31/00

(54) **APPARATUS FOR MANUFACTURING POUCH CASE AND METHOD FOR MANUFACTURING POUCH CASE**

(30) Priority: 26.02.2024 KR 20240027479
(71) Applicant: LG Energy Solution, Ltd., Seoul 07335 (KR)
(72) Inventor: CHOI, Min Sung, Daejeon 34122 (KR)
(74) Representative: Goddar, Heinz J.
(86) International application number: PCT/KR2025/002644
(87) International publication number: WO 2025/183443

(57) **Abstract**

The present invention relates to a pouch case manufacturing device and a pouch case manufacturing method, and more specifically, relates to a pouch case manufacturing device and a pouch case manufacturing method, capable of alleviating an edge curling phenomenon of a pouch case caused by cup forming for insertion of an electrode assembly.

According to one example of the present invention, a pouch case manufacturing method may be provided, which comprises: a cup forming step in which the cup is formed on a base material whose moving has stopped through a cup forming part installed on a moving route of the base material; an edge forming step in which both side edges of the base material in which the cup is formed are formed to be inclined upward relative to the lateral of the cup through an edge forming part installed at the rear end of the cup forming part; and a cutting step in which the base material having the cup and both side edges as inclined upward is cut to become the pouch case through a cutting part installed at the rear end of the edge forming part.

## Description

### Technical Field

The present invention relates to a pouch case manufacturing device and a pouch case manufacturing method, and more specifically, relates to a pouch case forming device and a pouch case manufacturing method, capable of preventing a curling phenomenon of edges of a pouch case by forming both side edges of a base material formed with an electrode assembly-insertable cup to be inclined upward, and then cutting the base material.

This application claims the benefit of priority based on Korean Patent Application No. 10-2024-0027479 dated February 26, 2024, the disclosure of which is incorporated herein by reference in its entirety.

### Background Art

Recently, the demand for secondary batteries capable of repeatedly performing charging and discharging increases. The secondary battery comprises an electrode assembly and a case surrounding the electrode assembly. Various types of secondary batteries are provided depending on the shape of the electrode assembly or the type of the case.

The electrode assembly is formed by repeatedly laminating a positive electrode, a separator, a negative electrode, and a separator, and various methods for manufacturing a single electrode assembly are provided.

A pouch-type secondary battery manufactured by accommodating an electrode assembly in a pouch case has excellent output performance relative to its weight. This is because the electrode assembly is wrapped using a thin pouch sheet, so that the weight of the case can be reduced and a dead space can be minimized.

When a pouch case is manufactured using a pouch sheet, a process of forming a cup, in which an electrode assembly is inserted and seated, in the pouch sheet can be performed.

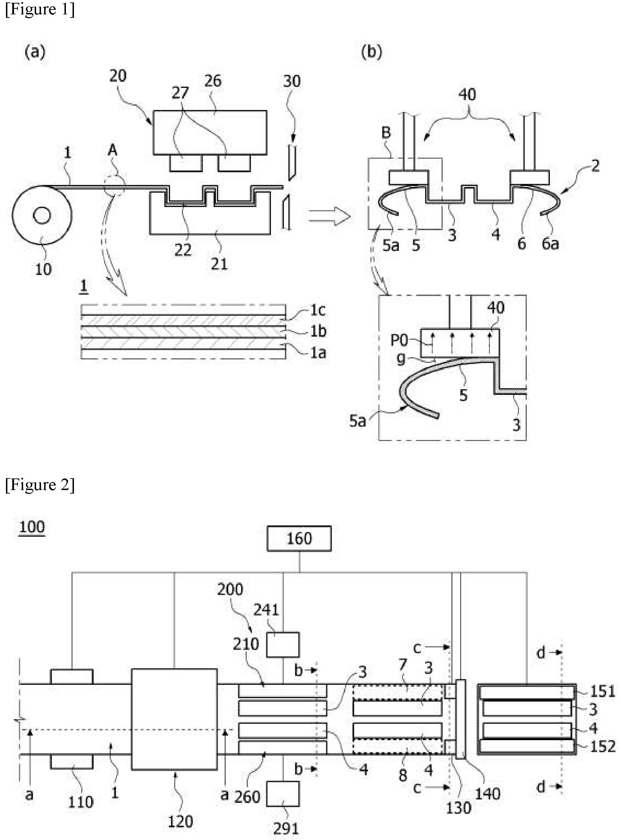

Figure 1 is a diagram for explaining, upon manufacturing of a conventional pouch case, a curling phenomenon occurring at edges of the pouch case.

As illustrated in Figure 1, the pouch case manufacturing device (20) comprises a die (21) having a mold groove (22) and a punch (26) having a block (27).

The pouch case manufacturing device (20) can form the two cups (3, 4) on the base material (1) through the following process. For convenience of explanation, it has been illustrated in Figure 1 that two cups have been formed side by side in the length direction of the base material (1), but really, as shown in Figure 2, two cups may be formed side by side in the width direction of the base material (1).

First, the die (21) is raised in a direction approaching the punch (26) and simultaneously pressurizes the base material (1) with the punch (26). The block (27) of the punch (26) elongates the base material (1) into the mold groove (22) of the die (21). Accordingly, two cups (3, 4) are formed in the base material (1).

In the process of forming two cups (3, 4) in the base material (1), stress is generated in regions where two cups (3, 4) are formed in the base material (1) due to the force in which the die (21) pressurizes the punch (26).

After the cups (3, 4) are formed in the base material (1), the die (21) returns to its original position. Then, the base material (1) in which the cups (3, 4) are formed is cut into pouch cases (2) by a cutting device (30).

As shown in Figure 1(b), both side edges (5, 6) of the pouch case (2) can be curled in a direction closer to the bottom surface of the cups (3, 4) due to the residual stress of the base material (1) and different elastic recovery forces depending on the material constituting the base material (1).

Referring to the enlarged view A of Figure 1(a), the base material (1) is a sheet in which a lower resin layer (1a), a metal layer (1b), and an upper resin layer (1c) are laminated sequentially. The lower resin layer (1a), the metal layer (1b), and the upper resin layer (1c) have different materials.

For example, the lower resin layer (1a) may be polyethylene terephthalate (PET) or nylon, and the like, having insulating properties. The metal layer (1b) may be an aluminum material that maintains mechanical strength and prevents moisture and oxygen from penetrating. The upper resin layer (1c) may be a polyolefin-based material that has thermal adhesiveness and thus acts as a sealant.

The lower resin layer (1a), the metal layer (1b), and the upper resin layer (1c) have different elastic recovery forces due to different material properties. The elastic recovery force is a force that an object deformed by an external force tries to return to its original shape and size if the force is removed.

As described above, when the edge (5, 6) of the pouch case (2) is curled upon formation of the pouch case (2), it can cause the following problems.

As one example, referring to Figure 1(b), a pickup device (40) adsorbs the pouch case (2). The pickup device (40) is in contact with both side edges (5, 6) of the pouch case (2) and provides a vacuum pressure (P0) to adsorb both side edges (5, 6) of the pouch case (2).

Referring to the enlarged view B of Figure 1(b), when both side edges (5, 6) of the pouch case (2) are curled, the atmospheric pressure flows into gaps (g) between both side edges (5, 6) of the pouch case (2), whereby there is a problem that the pickup device (40) cannot stably adsorb the pouch case (2).

In addition, the curled portions (5a, 6a) of the pouch case (2) may be folded to the edges (5, 6) during a step of folding the pouch case (2) in half. In this way, when the folded portion is formed in the edges (5, 6), it can cause a sealing defect of the pouch case (2).

### Disclosure

### Technical Problem

The present invention is intended to solve the problems of the conventional pouch case forming device and manufacturing method.

Through one example of the present invention, it is intended to provide a manufacturing device and a method for manufacturing a pouch case, capable of effectively removing curling caused by forming a cup in a pouch base material.

Through one example of the present invention, it is intended to provide a manufacturing device and a method for manufacturing a pouch case, capable of improving process efficiency by performing curling removal during a transfer process of a pouch base material rather than an additional process.

Through one example of the present invention, it is intended to provide a manufacturing device and a method for manufacturing a pouch case, capable of preventing curling of the edges of the pouch case, by forming a cup on a base material, and then, before cutting the base material, forming both side edges of the base material to be inclined upward relative to the lateral of the cup, and then cutting the base material.

### Technical Solution

In order to achieve the above-described object, according to one example of the present invention, a method for manufacturing a pouch case having a cup for which an electrode assembly is inserted using a pouch base material may be provided, in which the method for manufacturing a pouch case comprises: a cup forming step in which the cup is formed on a base material whose moving has stopped through a cup forming part installed on a moving route of the base material; an edge forming step in which both side edges of the base material in which the cup is formed are formed to be inclined upward relative to the lateral of the cup through an edge forming part installed at the rear end of the cup forming part; and a cutting step in which the base material having the cup and both side edges as inclined upward is cut to become the pouch case through a cutting part installed at the rear end of the edge forming part.

It is preferable that the base material repeats stopping after moving at a certain pitch, and sequentially passes through the cup forming part, the edge forming part, and the cutting part.

The certain pitch may correspond to a length of a unit pouch case. Cup forming and cutting may be performed upon stopping of the base material. That is, the cup forming step and the cutting step may be performed simultaneously during moving stop of the base material.

It is preferable that the edge forming step is performed while the base material moves from the cup forming part to the cutting part. Since the edge forming is performed during moving of the base material, a separate process time for edge forming is not added.

While a portion of the base material in which the cup forming has been performed is transferred, the edge forming may be performed, and it may be transferred and cut after the edge forming.

It is preferable that the edge forming part supports the base material in the cup forming step and forms both side edges of the base material simultaneously in the edge forming step.

Upon cup forming, the front end of the base material may be supported through a conveying roller and the rear end may be supported through the edge forming part. The edge forming part may also be a type of conveying roller, but the edge forming part may be implemented through rollers electrically driven through up-and-down rollers. Therefore, the edge forming part also preferably performs the function of guiding the transfer of the base material while supporting the base material. Particularly, it may perform the function of supporting both ends of the base material in the width direction and guiding the transfer.

It is preferable that the edge forming part forms both side edges of the base material to be inclined upward relative to the lateral of the cup by pressurizing them in the width direction of the base material in the edge forming step.

It is preferable that the edge forming part comprises a pair of up-and-down rollers arranged to form the edges of the base material to be inclined upward by pressurizing and rolling them, and in the edge forming step, the pair of rollers guides moving of the base material so that the base material moves from the cup forming part toward the cutting part, and pressurizes and rolls the edges of the base material simultaneously.

It is preferable that the pair of rollers is disposed symmetrically on both sides of the base material.

The pair of rollers may be driven in synchronization with the transfer speed of the base material, and may be driven and stopped in conjunction with the transferring and stopping of the base material.

In the cup forming step, the cup may be formed in two side by side in the width direction of the base material.

It is preferable that the cup is formed in a rectangular shape, and the length of the side in the moving direction of the base material is longer than the length of the side in the width direction of the base material.

Therefore, the total length of the unit pouch case is longer than the width. Therefore, the difference between an elongation ratio of the uppermost layer and an elongation ratio of the lowermost layer in the base material may be formed more clearly in the width direction than in the length direction by the cup forming. As a result, curling may occur severely on both side edges of the unit pouch case.

The pair of rollers may form a convex portion recessed upward opposite to the direction of cup forming. The cup forming part repeatedly forms only a portion of the entire base material. On the other hand, the edge forming part may may perform continuous forming on the entire base material.

Of course, the gap between the pair of rollers may be varied. That is, it may be varied between an interval at which pressurization rolling is performed and an interval at which pressurization rolling is not performed. The pressurization rolling may be performed only on the edge portion of the cup, and the pressurization rolling may not be performed on an unformed portion between cups in the longitudinal direction of the base material.

In order to achieve the above-described object, according to one example of the present invention, a device for manufacturing a pouch case having a cup for which an electrode assembly is inserted using a pouch base material may be provided, in which the device for manufacturing a pouch case comprises: a cup forming part including a mold die and a punch, and arranged to form the cup recessed downward in the base material whose moving is stopped; a cutting part installed parallel to the width direction of the base material at the rear end of the edge forming part and arranged to cut the base material; and an edge forming part installed between the cup forming part and the cutting part, and arranged to form both side edges of the base material in which the cup is formed to be inclined upward relative to the lateral of the cup by pressurizing the edges.

The cup may be formed in two side by side in the width direction of the base material. An electrode assembly may be seated on one side cup, and the pouch case may be folded between the cups, and then the other side cup may cover the electrode assembly. Thereafter, sealing may be performed on the edges of the pouch case.

It is preferable that the cup is formed in a rectangular shape, and the length of the side in the moving direction of the base material is longer than the length of the side in the width direction of the base material.

The edge forming part may comprise a pair of first up-and-down rollers provided to form a convex portion recessed upward by pressurizing and rolling a first edge among both side edges of the base material; and a pair of second up-and-down rollers provided to form a convex portion recessed upward by pressurizing and rolling a second edge among both side edges of the base material.

It is preferable that the pair of first rollers and the pair of second rollers are arranged so that they support both side edges of the base material in the width direction of the base material and guide moving of the base material from the cup forming part toward the cutting part.

The pair of rollers may comprise an upper roller and a lower roller, and the base material may be transferred and guided between the upper roller and the lower roller. The gap between the upper roller and the lower roller may be varied. It may be divided into a gap for a pressurizing roller and a gap for simple transfer.

Therefore, on the base material to be transferred, continuous pressurization rolling may be performed, or selective pressurization rolling may be performed.

The first roller and the second roller may each comprise an upper roller having a first outer surface whose diameter decreases from one end to the other end along a central axis and a groove portion recessed along the circumferential direction of the first outer surface.

The first roller and the second roller may each comprise a lower roller having a second outer surface whose diameter increases from one end to the other end along a central axis and a protrusion protruding convexly along the circumferential direction of the second outer surface and arranged to be insertable into the groove portion.

The groove portion may have a semicircular cross-section having a predetermined curvature, and the protrusion may have a curvature smaller than the curvature of the groove portion and may be arranged to be contactable with a part of the groove portion.

A convex portion may be formed on the base material by coupling between the groove portion and the protrusion. It is preferable that the convex portion is formed by being recessed in the opposite direction to the cup.

It is preferable that the upper roller has a truncated cone shape arranged so that the first outer surface is inclined within 10° to 20° with respect to the central axis. An inclination angle of the edge may be formed by such an inclination angle, and even after the unit pouch is formed by cutting later, it is possible in advance to prevent the edge from sagging due to a load.

It is preferable that the lower roller has a truncated cone shape arranged so that a second outer surface is contactable with the first outer surface.

### Advantageous Effects

According to one example of the present invention, it is possible to effectively prevent curling of the edges of the pouch case, by forming a cup on a base material, and then, before cutting the base material, forming both side edges of the base material to be inclined upward relative to the lateral of the cup, and then cutting the base material.

According to one example of the present invention, by installing the edge forming part between the cup forming part and the cutting part, the existing constitutions of the forming device can be used as such without any changes, and thus a very economical effect can be expected.

According to one example of the present invention, upon formation of the pouch case, by preventing curling of the edges in the pouch case, it is possible in advance to prevent manufacturing defects of secondary batteries which can be caused by curling of the edge of the pouch case.

According to one example of the present invention, by preventing the edge of the unit pouch case from sagging downward by its own weight, an effect that the subsequent assembly process is easy can be expected.

### Description of Drawings

Figure 1 is a diagram for explaining, upon manufacturing of a conventional pouch case, a curling phenomenon occurring at edges of the pouch case.
Figure 2 is a plan view of a pouch case manufacturing device according to one example of the present invention, which is a diagram for explaining arrangement of a cup forming part, an edge forming part, a cutting part, and a grip transfer part.
Figure 3 is a diagram for explaining a process in which a cup forming part forms two cups on a base material.
Figure 4(a) is a perspective diagram of a base material on which two cups are formed, and Figure 4(b) is an a-a cross-sectional diagram of Figure 4(a).
Figure 5 is a b-b cross-sectional diagram of Figure 2, which is a diagram for explaining a process in which an edge forming part forms edges.
Figure 6 is a c-c cross-sectional diagram of Figure 2, which is a diagram for explaining a state where a grip transfer part holds both side edges of a base material.
Figure 7 is a d-d cross-sectional diagram of Figure 2, which is a diagram for explaining a process in which a pickup part vacuum-absorbs a pouch case.
Figure 8 is a diagram for explaining a process of forming a pouch case according to one example of the present invention.
Figure 9 is a diagram for explaining a process of transporting a pouch case formed according to one example of the present invention to a folding part, and sealing the pouch case by a sealing part.

### Best Mode

Hereinafter, with reference to the attached drawings, a device for manufacturing a pouch case according to a preferred example of the present invention will be described.

The manufacturing device may be referred to as a manufacturing device for manufacturing a unit pouch while a roll-shaped pouch sheet (hereinafter referred to as a 'base material') is transferred.

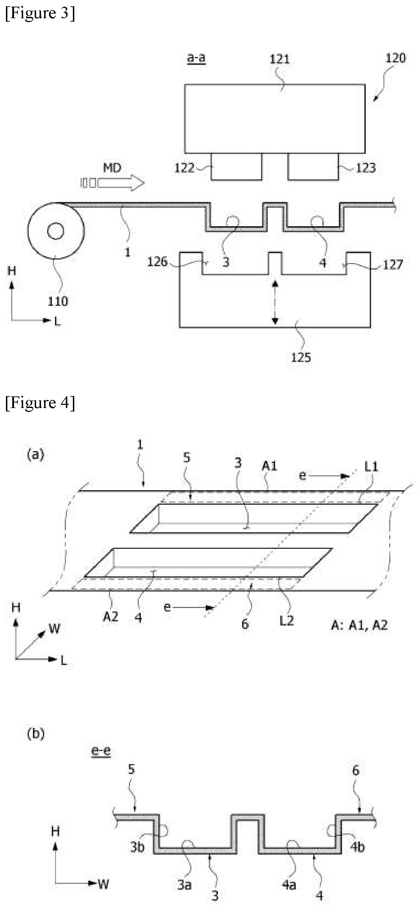

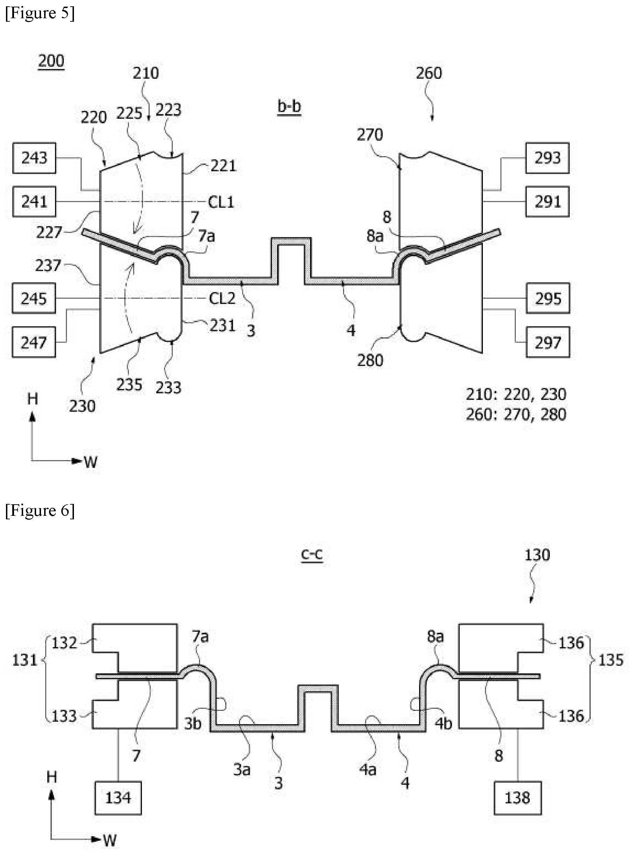

Figure 2 is a plan view of a pouch case manufacturing device according to one example of the present invention, which is a diagram for explaining arrangement of a cup forming part, an edge forming part, a cutting part, and a grip transfer part, and Figure 4(a) is a perspective diagram of a base material on which two cups are formed, and Figure 4(b) is an a-a cross-sectional diagram of Figure 4(a), and Figure 5 is a b-b cross-sectional diagram of Figure 2, which is a diagram for explaining a process in which an edge forming part forms edges.

As shown in Figure 2, the manufacturing device (100) of a pouch case according to one example of the present invention may comprise a cup forming part (120) and a cutting part (140), and may comprise an edge forming part (200) arranged between the cup forming part (120) and the cutting part (140).

After the cup is formed in the cup forming part (120), the curling may be removed through the edge forming part (200), and then it can be cut into the unit pouch case through the cutting part (140).

The inventors of the present invention could confirm that the curling could occur clearly after the base material was cut into the unit pouch case. That is, in the continuous base material state, the curling tendency was hidden by the tension applied to the base material, but in the unit pouch case state, the tension was released, whereby it could be confirmed that the curling tendency appeared extremely.

It is quite troublesome to remove the curling from the unit pouch case in the individual state. Therefore, it could be derived in the present example that it was more effective to alleviate or eliminate the curling tendency before the individual state, i.e., in the continuous base material state.

The cup forming part is for forming a pouch case (2) having an electrode assembly-insertable cup (3, 4), which may comprise a mold die and a punch. Specifically, the cup forming part may comprise a mold die having a mold groove and a punch having a block arranged to be insertable into the mold groove. The cup forming part (120) may be referred to as a forming device arranged to form the cup (3, 4) on the base material (1) whose moving is stopped.

The cutting part (140) may be referred to as a cutting device installed parallel to the width direction (W) of the base material (1) at the rear end of the edge forming part (200) and arranged to cut the base material (1).

The edge forming part (200) may be referred to as an edge forming device installed between the cup forming part (120) and the cutting part (140), and arranged to form both side edges (5, 6) of the base material (1), in which the cup (3, 4) is formed, to be inclined upward relative to the lateral of the cup (3, 4) by pressurizing them.

The pouch case manufacturing device (100) comprises a moving part (110) which moves the base material (1) from the cup forming part (120) toward the cutting part (140) while repeating stopping after moving at a certain pitch and then stopping. The moving part (110) comprises the edge forming part (200) and the grip transfer part (130).

The pouch case manufacturing device (100) may comprise a control part (160) controlling operation of the cup forming part (120), the edge forming part (200), the moving part (110), the cutting part (140), and the grip transfer part (130). The cup forming part (120) and the cutting part (140) operate upon moving stop of the base material (1). The edge forming part (200) operates upon moving of the base material (1). Therefore, the additional process time for edge forming may be eliminated. In addition, since the edge forming part can be installed by utilizing the transfer space between the cup forming part and the cutting part, it can be said to be very economical.

The cup forming part (120), the edge forming part (200), and the cutting part (140) may be sequentially disposed along the moving direction (MD) of the base material (1). The moving direction (MD) of the base material is parallel to the longitudinal direction (L) of the base material (1).

As shown in Figure 3, the cup forming part (120) comprises a mold die (125) and a punch (121). The mold die (125) has a first mold groove (126) and a second mold groove (127) parallel to the first mold groove (126). The punch (121) is installed on the top of the mold die (125). The punch (121) has a first block (122) arranged to be insertable into the first mold groove (126) and a second block (123) arranged to be insertable into the second mold groove (127).

The mold die (125) moves up and down toward the punch (121) along the height direction (H), and pressurizes the base material (1) with the punch (121). In this instance, the first block (122) of the punch (121) elongates the base material (1) into the first mold groove (126) to form a first cup (3) on the base material (1). Then, the second block (123) of the punch (121) elongates the base material (1) into the second mold groove (127) to form a second cup (4) on the base material (1).

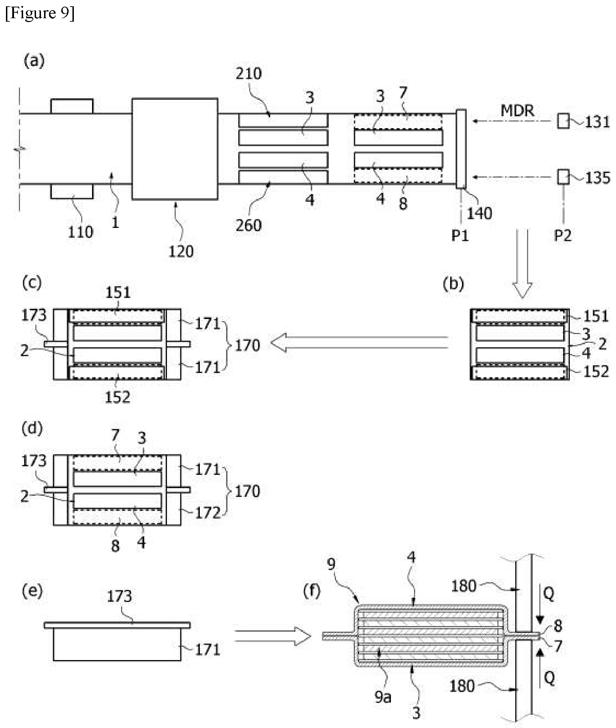

The first cup (3) and the second cup (4) may be formed in a rectangular shape. The length of the side of the first cup (3) and the second cup (4) with respect to the moving direction of the base material (1) may be longer than the length of the side with respect to the width direction (W) of the base material (1). The first cup (3) and the second cup (4) are arranged so that an electrode assembly (9a, see Figure 9(e)) can be inserted.

In this specification, for convenience of explanation, the edge extended from a first long side (L1) of the first cup (3) is referred to as a first edge (5). Then, the edge extended from a second long side (L2) of the second cup (4) is referred to as a second edge (6). The second edge (6) is parallel to the first edge (5) along the length direction (L) of the base material (1) and spaced apart from the first edge (5) along the width direction (W) of the base material (1).

In this specification, reference numerals 5 and 7 designate the first edge (5), and specifically, the reference numeral 5 designates the first edge (5) of the base material (1) before passing through the edge forming part (200), and the reference numeral 7 designates the first edge (5) inclined upward relative to the first cup (3) while passing through the edge forming part (200).

In addition, a reference numeral 6 designates the second edge (6) of the base material (1) before passing through the edge forming part (200), and a reference numeral number 8 designates the second edge (6) inclined upward relative to the second cup (4) while passing through the edge forming part (200).

The edge forming part (200) is installed between the cup forming part (120) and the cutting part (140).

As shown in Figure 5, the edge forming part (200) may comprise a pair of first rollers (210) arranged to form the first edge (5) of both side edges in the base material (1) to be inclined upward by pressurizing and rolling it, and a pair of second rollers (260) arranged to form the second edge (6) of both side edges in the base material (1) to be inclined upward by pressurizing and rolling it.

The first edge (5) may be formed to be inclined upward relative to the lateral (3b) of the first cup (3) while passing through the pair of first rollers (210). In addition, the second edge (6) may be formed to be inclined upward relative to the lateral (4b) of the second cup (4) while passing through the pair of second rollers (260).

The pair of first rollers (210) and the pair of second rollers (260) may each support both side edges (5, 6) of the base material (1) in the width direction (W) of the base material (1), and may be arranged to guide moving of the base material (1) from the cup forming part (120) toward the cutting part (140).

The pair of first rollers (210) and the pair of second rollers (260) may be disposed to be symmetrical to each other. The pair of first rollers (210) comprises a first upper roller (220) and a first lower roller (230). The pair of second rollers (260) comprises a second upper roller (270) and a second lower roller (280).

The first upper roller (220) and the second upper roller (270) have the same shape. The first lower roller (230) and the second lower roller (280) have the same shape. To avoid repetition of explanation in the present example, the first upper roller (220) and the first lower roller (230) will be mainly described.

The first upper roller (220) has a first outer surface (225) whose diameter decreases from one end to the other end along the first central axis (CL1) and a recessed groove portion (223) along the circumferential direction of the first outer surface (225).

The groove portion (223) has a semicircular cross-section with a predetermined curvature. The groove portion (223) serves to fix a boundary between the first cup (3) and the first edge (5) together with a protrusion (233) to be described below.

The first upper roller (220) may have a truncated cone shape. The first upper roller (220) has a first reference surface (221) perpendicular to the first central axis (CL1), a first opposite surface (227) parallel to the first reference surface (221), and a first outer surface (225) connecting the first reference surface (221) and the first opposite surface (227).

The first reference surface (221) has a cross-sectional area larger than that of the first opposite surface (227). The first outer surface (225) is a surface connecting the first reference surface (221) and the first opposite surface (227). The first outer surface (225) is arranged to be inclined within a range of 10° to 20° with respect to the first central axis (CL1).

The first upper roller (220) is arranged to be contactable with the upper surface of the first edge (5). The first upper roller (220) is disposed such that the first central axis (CL1) is parallel to the width direction (W) of the base material (1).

The first upper roller (220) may be mounted with a first upper drive part (241). The first upper drive part (241) may be a motor rotating the first upper roller (220).

The first upper roller (220) is mounted with a first height adjustment member (243). The first height adjustment member (243) is for adjusting the height of the first upper roller (220) along the height direction (H).

The first height adjustment member (243) is in a bolt type, which may adjust the gap of the first upper roller (220) with respect to the first lower roller (230) by adjusting a degree of tightening. Alternatively, as the first height adjustment member (243), a reciprocating cylinder may be used, which is movable along the height direction (H).

The first lower roller (230) has a second outer surface (235) whose diameter increases from one end to the other end along the second central axis (CL2) and a protrusion (233) protruding convexly along the circumferential direction of the second outer surface (235).

The protrusion (233) has a curvature smaller than the curvature of the groove portion (223). The protrusion (233) protrudes convexly along the circumferential direction of the second outer surface (235). The protrusion (233) is arranged to be contactable with a part of the groove portion (223).

The first lower roller (230) may have a truncated cone shape in which the second outer surface (235) is arranged to be contactable with the first outer surface (225) of the first upper roller (220).

The first lower roller (230) has a second reference surface (231) perpendicular to the second central axis (CL2), a second opposite surface (237) parallel to the second reference surface (231), and a second outer surface (235) connecting the second reference surface (231) and the second opposite surface (237).

The second reference surface (231) has a cross-sectional area smaller than that of the second opposite surface (237). The second outer surface (235) is arranged to be inclined within a range of 10° to 20° with respect to the second central axis (CL2).

The first lower roller (230) is arranged to be contactable with the lower surface of the first edge (5). The first lower roller (230) is disposed so that the second central axis (CL2) is parallel to the width direction (W) of the base material (1).

The first lower roller (230) is mounted with a first lower drive part (245). The first lower drive part (245) may be a motor rotating the first lower roller (230).

The first lower roller (230) is mounted with a second height adjustment member (247). The second height adjustment member (247) is for adjusting the height of the first lower roller (230) along the height direction (H).

The second height adjustment member (247) is in a bolt type, which may adjust the gap of the first lower roller (230) with respect to the first upper roller (220) by adjusting a degree of tightening. As the second height adjustment member (247), a reciprocating cylinder may be used.

The first lower roller (230) pressurizes and rolls the first edge (5) while rotating in the opposite direction to the first upper roller (220). At this time, the protrusion (233) may form a partial region of the first edge (5) convexly on the top of the lateral of the first cup (3) by elongating the region toward the groove portion (223). Then, the second outer surface (235) of the first lower roller (230) may form the remaining region of the first edge (5) to be inclined upward relative to the lateral (3b) of the first cup (3) by elongating the region toward the first outer surface (225).

The protrusion (233) can prevent the base material (1) from being deviated from the normal position along the width direction (W) of the base material (1) upon rotation of the first upper roller (220) and the first lower roller (230) by pressurizing a partial region of the first edge (5) including the first long side (L1) of the first cup (3) toward the groove portion (223) along the height direction (H).

Upon rotation of the first upper roller (220) and the first lower roller (230), the protrusion (233) may form a first convex portion (7a) having a predetermined curvature by pressurizing and rolling a partial region of the first edge (5) together with the groove portion (223), and elongating a partial region of the first edge (5) upward in the height direction (H).

The first convex portion (7a) is formed between the vertical surface of the cup and the first edge (5), where the first edge may be formed to be inclined upward by the first convex portion (7a).

In addition, the first upper roller (220) and the first lower roller (230) may pressurize and roll the remaining region of the first edge (5) located between a first inclined surface (225) and a second inclined surface (235) while rotating in opposite directions, thereby forming the region to be inclined to the upper portion of the lateral (3b) of the first cup (3).

The first convex portion (7a) may form a line dividing the lateral (3b) of the first cup (3) and the upward inclined first edge (7) along the first long side (L1) of the first cup (3). The first convex portion (7a) is arranged convexly to the upper portion of the height direction (H) from the lateral (3b) of the first cup (3). The first convex portion (7a) may have a semicircular cross-section.

The upward inclined first edge (7) may be bent to the upper portion of the height direction (H) from the first convex portion (7a), and may be arranged not to be parallel or orthogonal to the bottom surface (3a) and the lateral (3b) of the first cup (3), respectively.

The upward inclined first edge (7) is arranged to be inclined within a range of 10° to 20° with respect to the lateral (3b) of the first cup (3).

The upward inclined first edge (7) is a part of the base material (1) extended from the first cup (3). The upward inclined first edge (7) may be arranged to be inclined to the upper portion of the lateral (3b) of the first cup (3) to have predetermined elasticity.

The second upper roller (270) is mounted with the second upper drive part (291) and the third height adjustment member (293). The second upper drive part (291) may be a motor rotating the second upper roller (270). The third height adjustment member (293) is for adjusting the height of the second upper roller (270) relative to the second lower roller (280).

The second lower roller (280) has the same shape as that of the first lower roller (230). The second lower roller (280) is arranged on the lower surface of the second edge (6) to be symmetrical with the first lower roller (230) in the width direction (W) of the base material (1). The second lower roller (280) may pressurize and roll the second edge (6) together with the second upper roller (270).

The second lower roller (280) is mounted with the second lower drive part (295) and the fourth height adjustment member (297). The second lower drive part (295) may be a motor rotating the second lower roller (280). The fourth height adjustment member (297) is for adjusting the height of the second lower roller (280) with respect to the second upper roller (270).

The second upper roller (270) and the second lower roller (280) may form the second edge (6) of the base material (1) to have a second convex portion (8a) and to be inclined upward relative to the lateral (4b) of the second cup (4) by pressurizing and rolling the second edge.

The second convex portion (8a) may form a line dividing the lateral (4b) of the second cup (4) and the second edge (8) formed to be inclined upward along the second long side (L2) of the second cup (4). The second convex portion (8a) is arranged convexly to the upper portion of the height direction (H) from the lateral (4b) of the second cup (4). The second convex portion (8a) may have a semicircular cross-section.

The second edge (8) formed to be inclined upward may be bent to the upper portion of the height direction (H) from the second convex portion (8a), and may be arranged not to be parallel or orthogonal to the bottom surface (4a) and the lateral (4b) of the second cup (4), respectively.

The second edge (8) formed to be inclined upward may be arranged to be inclined within a range of 10° to 20° with respect to the lateral (4b) of the second cup (4). The second edge (8) formed to be inclined upward is arranged to be symmetrical with the first edge (7) formed to be inclined upward.

The second edge (8) formed to be inclined upward may be arranged to be inclined upward to the upper portion of the lateral (4b) of the second cup (4), thereby having elasticity. Even if the lower resin layer (1a), the metal layer (1b), and the upper resin layer (1c) constituting the base material (1) have different elastic recovery forces, the first and second edges (7, 8) formed to be inclined upward have predetermined elasticity, so that they may not bend in the direction of approaching the bottom surfaces (3a, 4a) of the first and second cups (3, 4) upon cutting of the base material (1).

Figure 6 is a c-c cross-sectional diagram of Figure 2, which is a diagram for explaining a state where a grip transfer part holds both side edges of a base material.

The grip transfer part (130) holds both side edges (5, 6) of the base material (1) to move the base material (1) in the moving direction (MD). The grip transfer part (130) can reciprocate between a cutting position (P1) and a transfer position (P2) as preset along the longitudinal direction (L) of the base material (1) at the rear end of the edge forming part (200).

The grip transfer part (130) is arranged to hold both side edges of the base material (1) (5, 6). The transfer position (P2) is a position spaced apart from the cutting position (P1) by the length of the pouch case (2).

The grip transfer part (130) comprises a first gripper (131) and a second gripper (135).

The first gripper (131) is disposed to hold the first edge (5). The first gripper (131) comprises a first upper grip bar (132) and a first lower grip bar (133). The first upper grip bar (132) and the first lower grip bar (133) are arranged to hold the first edge (5) in a forceps manner.

The first gripper (131) is mounted with a first transfer part (134). The first transfer part (134) is arranged to move the first gripper (131) in the moving direction (MD) or the reverse direction (MDR) of the first gripper (131). The first transfer part (134) may be a drive device such as a linear motor or a reciprocating cylinder.

The second gripper (135) is disposed to hold the second edge (6). The second gripper (135) comprises the second upper grip bar (136) and the second lower grip bar (137). The second upper grip bar (136) and the second lower grip bar (137) are arranged to hold the second edge (6) in a forceps manner.

The second transfer part (138) may move the second gripper (135) in the moving direction (MD) or the reverse direction (MDR) of the second gripper (135). The second transfer part (138) may be a drive device such as a linear motor or a reciprocating cylinder.

The pouch case manufacturing device (100) having such a structure may form both side edges (5, 6) of the base material (1) to be inclined upward by installing an edge forming part (200) between the cup forming part (120) and the cutting part (140).

The edge forming part (200) is stopped upon forming operation of the cup forming part (120) to hold the base material (1) at the rear end of the cup forming part (120), so that it enables the base material (1) to be stretched in the height direction (H) upon the forming operation of the cup forming part (120).

In addition, the edge forming part (200) may form the edges (5, 6) of the base material (1) to be inclined upward in succession with the forming of the cups (3, 4) by pressurizing and rolling the base material (200) while the base material (1) in which the cups (3, 4) are formed moves toward the cutting part (140).

The pouch case manufacturing device (100) can improve the forming efficiency of the pouch case by continuously performing the forming of the cups (3, 4) and the forming of the edges (5, 6).

Furthermore, the pouch case manufacturing device (100) can prevent curling of the edges of the pouch case (2) by forming the cups (3, 4) and both side edges (7, 8) as inclined upward on the base material (1) while the base material (1) repeatedly moves at a certain pitch and stops, and then cutting the base material (1).

The curling occurrence mechanism and the curling prevention mechanism are explained through Figure 1 as follows.

First, the elongation ratios of the upper resin layer (1c) and the lower resin layer (1a) are different due to the cup forming. That is, the inner surface of the cup is formed by the upper resin layer (1c) and the outer surface of the cup is formed by the lower resin layer (1a) due to the cup forming. The elongation ratio of the lower resin layer (1c) becomes greater than that of the upper resin layer (1c) due to the cup forming. Therefore, after the cup forming is completed, the restoring force of the lower resin layer (1c) becomes greater than that of the upper resin layer (1a). As a result, curling as shown in Figure 1 may occur at the edge portion after the cup forming is completed.

Considering the curling occurrence mechanism, it can be understood that the curling prevention mechanism can be implemented by performing the forming as opposed to the curling occurrence mechanism. That is, if the elongation ratio of the upper resin layer (1c) is small due to the cup forming, the elongation ratio of the upper resin layer (1c) can be made large through the edge forming.

That is, a convex portion which is convex upward may be formed between the cup and the edge. As one example, the cup is in a downwardly convex shape and the convex portion is in an upwardly convex shape. By forming the convex portion, the elongation ratio of the upper resin layer (1c) in the convex portion becomes greater than that of the lower resin layer (1a). Therefore, the difference in elongation ratio between the upper resin layer and the lower resin layer is minimized overall, so that curling can be alleviated or eliminated.

In addition, it is very preferable to make the edge or wing to be inclined upward as it goes outward upon the edge forming. This is because the edge of the unit pouch case cannot help but sag downward due to its own weight. Therefore, by making the edge to be inclined upward, it is possible to prevent it from sagging downward. This may mean that the subsequent operation of the gripper is easy, and may also mean that the subsequent assembly process of folding and sealing the pouch case is easy.

Hereinafter, a pouch case (2) manufacturing method of forming a pouch case using a pouch case manufacturing device (100) will be described.

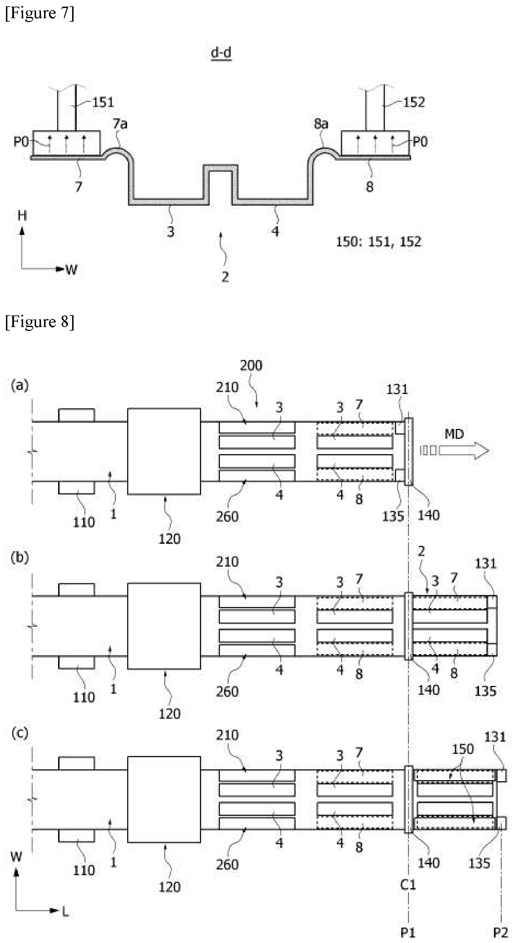

Figure 8 is a diagram for explaining a process of forming a pouch case according to one example of the present invention, and Figure 9 is a diagram for explaining a process of transporting a pouch case formed according to one example of the present invention to a folding part, and sealing the pouch case by a sealing part.

Referring to Figure 8, a pouch case manufacturing method according to one example of the present invention is for forming a pouch case (2) having an electrode assembly-insertable cup (3, 4), which may comprise a cup forming step in which the cup (3, 4) is formed on a base material (1) whose moving has stopped in a cup forming part (120) installed in a moving route of the base material (1), an edge forming step in which both side edges (5, 6) of the base material (1) in which the cup (3, 4) is formed are formed to be inclined upward relative to the lateral of the cup (3, 4) in an edge forming part (200) installed at the rear end of the cup forming part (120), and a cutting step in which the base material (1) having the cup (3, 4) and both side edges (7, 8) as inclined upward is cut to form the pouch case (2) in a cutting part (140) installed at the rear end of the edge forming part (200).

The base material (1) may repeat stopping after moving at a certain pitch, and pass through the cup forming part (120), the edge forming part (200), and the cutting part (140) sequentially.

The cup forming step may be performed during moving stop of the base material (1). In the cup forming step, the control part (160) may stop the moving of the base material (1) by stopping the moving part (110), the edge forming part (200), and the grip transfer part (130).

Referring to Figure 3, the cup forming part (120) moves the mold die (125) up and down in the direction of approaching the punch (121) along the height direction (H).

The mold die (125) pressurizes the base material (1) whose moving has stopped with the punch (121) while moving up and down along the height direction (H). In this instance, the base material (1) is stretched in the direction pressurized by the mold die (125), and the first cup (3) and the second cup (4) are formed by the punch (121).

Specifically, the first block (122) of the punch (121) elongates the base material (1) to the first mold groove (126) to form the first cup (3) on the base material (1). Then, the second block (123) of the punch (121) elongates the base material (1) to the second mold groove (127) to form the second cup (4) on the base material (1).

If the first cup (3) and the second cup (4) are formed on the base material (1) by such a process, the mold die (125) descends in the direction away from the punch (121) along the height direction (H) and returns to the original position.

In the cup forming step, the cup (3, 4) may be formed in two side by side in the width direction (W) of the base material (1). The cup (3, 4) may be formed in a rectangular shape, and the length of the side of the base material (1) in the moving direction may be longer than the length of the side of the base material (1) in the width direction (W).

After the cup forming step, the moving part (110) and the grip transfer part (130) move the base material (1) in the moving direction (MD). The moving direction (MD) is a direction from the cup forming part (120) toward the cutting part (140). Upon operation of the moving part (110), the base material (1) passes through the edge forming part (200) while moving in the moving direction (MD).

The edge forming step may be performed while the base material (1) moves from the cup forming part (120) to the cutting part (140).

The edge forming part (200) may support the base material (1) in the cup forming step, and continuously form both side edges (5, 6) of the base material (1) in the edge forming step.

The edge forming part (200) may form both side edges (5, 6) of the base material (1) to be inclined upward relative to the lateral of the cup (3, 4) by pressurizing them in the width direction of the base material (1) in the edge forming step.

The pair of first rollers (210) and the pair of second rollers (260) may guide the moving of the base material (1) so that the base material (1) moves from the cup forming part (120) toward the cutting part (140), and may simultaneously pressurize and roll both side edges (5, 6) of the base material (1).

In the edge forming step, the pair of first rollers (210) may form a first region (A1) including the first long side (L1) of the first cup (3) to be inclined upward relative to the lateral (3b) of the first cup (3). In addition, the pair of second rollers (260) may form a second region (A2) including the second long side (L2) of the second cup (4) to be inclined upward relative to the lateral (4b) of the second cup (4).

Through such processes, both side edges (7, 8) of the base material (1) may be formed to be symmetrical in the width direction (W) of the base material (1).

In the edge forming step, the grip transfer part (130) holds the ends of both side edges (5, 6) of the base material (1) at the preset cutting position (P1) and moves backward in the moving direction (MD).

Referring to Figure 6, the first gripper (131) holds the end of the first edge (5) at the cutting position (P1). Then, the second gripper (135) holds the end of the second edge (6) at the cutting position (P1).

The first gripper (131) and the second gripper (135) move from the cutting position (P1) to the transfer position (P2) in a state where the grippers hold the first edge (5) and the second edge (6). The first gripper (131) and the second gripper (135) are stopped at the transfer position (P2). The distance between the cutting position (P1) and the transfer position (P2) may be the length of the pouch case (2).

Referring to Figure 5, in the edge forming step, the pair of first rollers (210) and the pair of second rollers (260) form both side edges (5, 6) of the base material (1) to be inclined upward relative to the lateral (3b) of the first cup (3) and the lateral (4b) of the second cup (4) by pressurizing and rolling the edges in the moving direction (MD).

The base material (1) passing through the edge forming part (200) has a first edge (7) inclined upward relative to the lateral (3b) of the first cup (3) and a second edge (8) inclined upward relative to the lateral (4b) of the second cup (4).

The upward inclined first edge (7) is arranged to be inclined within a range of 10° to 20° with respect to the lateral (3b) of the first cup (3) toward the outside of the lateral (3b) of the first cup (3).

The upward inclined second edge (8) is arranged to be inclined within a range of 10° to 20° with respect to the lateral (4b) of the second cup (4) toward the outside of the lateral (4b) of the second cup (4). The upward inclined second edge (8) may be arranged to be symmetrical with the upward inclined first edge (7).

The cutting step may be performed during moving stop of the base material (1). In the cutting step, the control part (160) may stop the moving part (110), the edge forming part (200), and the grip transfer part (130) to stop the moving of the base material (1).

In the cutting step, the grip transfer part (130) is stopped in a state of holding the base material (1) at the transfer position (P2). Then, in the cutting step, the cutting part (140) cuts the base material (1) along an imaginary cutting line (C1) parallel to the width direction (W) of the base material (1) while moving in a direction approaching the base material (1) along the height direction (H) at the cutting position (P1).

After the cutting step is completed, the cutting part (140) moves in a direction away from the base material (1) along the height direction (H) and returns to the original position. Then, the grip transfer part (130) is separated from the both side edges (7, 8) of the pouch case (2) at the transfer position (P2).

Figure 7 is a d-d cross-sectional diagram of Figure 2, which is a diagram for explaining a process in which a pickup part vacuum-absorbs a pouch case.

The pickup part (150) may adsorb the pouch case (2) at the transfer position (P2) and transport it to a subsequent process for manufacturing a secondary battery (9). The subsequent process comprises a process of accommodating the electrode assembly (9a) in the first cup (3) of the pouch case (2) and a folding process of folding the pouch case (2) in half.

The pickup part (150) comprises a first adsorption member (151) and a second adsorption member (152). The pickup part (150) may vacuum-adsorb the upward inclined first edge (7) and second edge (8) of the pouch case (2) by applying a vacuum pressure (P0) to the first and second adsorption members (151, 152).

The pouch case (2) manufactured through the processes as above can be stably adsorbed to the first and second adsorption members (151, 152), because the edges (7,8) are not curled.

The pouch case (2) is provided to the folding part (170) after the electrode assembly (9a) is accommodated in the first cup (3). The above folding part (170) is a device folding the pouch case (2) in half so that the second cup (4) covers the first cup (3) and the first edge (7) and the second edge (8) are in contact with each other.

The folding part (170) comprises a first folding member (171) on which a part of the pouch case (2) including the first cup (3) is placed, and a second folding member (172) on which the remaining part of the pouch case (2) including the second cup (4) is placed. The first folding member (171) and the second folding member (172) are rotatably connected at a predetermined angle by a hinge axis (173).

Referring to Figures 9(c) to 9(e), the folding part (170) folds the pouch case (2) in half so that the second cup (4) covers the first cup (3) while the second folding member (172) rotates in a direction closer to the first folding member (171) in a state where the first folding member (171) and the second folding member (172) vacuum-absorb the lower surface of the pouch case (2).

Referring to Figure 9(f), after folding the pouch case (2), the edges (7, 8) of the pouch case (2) may be heat (Q)-fused by the sealing part (180) and sealed.

The present invention can prevent poor adsorption of the pickup part (150) for transporting the pouch case (2) to a subsequent process, and furthermore, prevent repeated warning alarms due to the poor adsorption, by preventing curling of the edges of the pouch case (2).

Also, the present invention prevents curling of the edge of the pouch case (2), thereby preventing a folding phenomenon in which a partial region of the edge of the pouch case (2) is folded to another region during the folding step of folding the pouch case (2) in half, so that it can prevent poor folding of the pouch case (2).

In addition, the present invention prevents poor sealing due to poor folding of the pouch case (2), whereby it can improve productivity of the secondary battery (9).

The preferred examples of the present invention as described above have been disclosed for illustrative purposes. Those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

It is described in the Detailed Description of Invention.

## Claims

1. A method for manufacturing a pouch case having a cup for which an electrode assembly is inserted using a pouch base material, wherein the method for manufacturing a pouch case comprises:
a cup forming step in which the cup is formed on a base material whose moving has stopped through a cup forming part installed on a moving route of the base material;
an edge forming step in which both side edges of the base material in which the cup is formed are formed to be inclined upward relative to the lateral of the cup through an edge forming part installed at the rear end of the cup forming part; and
a cutting step in which the base material having the cup and both side edges as inclined upward is cut to become the pouch case through a cutting part installed at the rear end of the edge forming part.

2. The method for manufacturing a pouch case according to claim 1, **characterized in that**
the base material repeats stopping after moving at a certain pitch, and sequentially passes through the cup forming part, the edge forming part, and the cutting part.

3. The method for manufacturing a pouch case according to claim 2, **characterized in that**
the edge forming step is performed while the base material moves from the cup forming part to the cutting part.

4. The method for manufacturing a pouch case according to claim 3, **characterized in that**
the cup forming step and the cutting step are performed simultaneously during moving stop of the base material.

5. The method for manufacturing a pouch case according to claim 1, **characterized in that**
the edge forming part supports the base material in the cup forming step and forms both side edges of the base material simultaneously in the edge forming step.

6. The method for manufacturing a pouch case according to claim 5, **characterized in that**
the edge forming part forms both side edges of the base material to be inclined upward relative to the lateral of the cup by pressurizing them in the width direction of the base material in the edge forming step.

7. The method for manufacturing a pouch case according to claim 6, **characterized in that**
the edge forming part comprises a pair of up-and-down rollers arranged to form the edges of the base material to be inclined upward by pressurizing and rolling them, and
in the edge forming step, the pair of rollers guides moving of the base material so that the base material moves from the cup forming part toward the cutting part, and pressurizes and rolls the edges of the base material simultaneously.

8. The method for manufacturing a pouch case according to claim 7, **characterized in that**
the pair of rollers is disposed to be symmetrical on both sides of the base material.

9. The method for manufacturing a pouch case according to claim 1, **characterized in that**
in the cup forming step, the cup is formed in two side by side in the width direction of the base material.

10. The method for manufacturing a pouch case according to claim 9, **characterized in that**
the cup is formed in a rectangular shape, and the length of the side in the moving direction of the base material is longer than the length of the side in the width direction of the base material.

11. A device for manufacturing a pouch case having a cup for which an electrode assembly is inserted using a pouch base material, wherein the device for manufacturing a pouch case comprises:
a cup forming part including a mold die and a punch, and arranged to form the cup recessed downward in the base material whose moving is stopped;
a cutting part installed parallel to the width direction of the base material at the rear end of the edge forming part and arranged to cut the base material; and
an edge forming part installed between the cup forming part and the cutting part, and arranged to form both side edges of the base material in which the cup is formed to be inclined upward relative to the lateral of the cup by pressurizing the edges.

12. The device for manufacturing a pouch case according to claim 11, **characterized in that**
the cup is formed in two side by side in the width direction of the base material.

13. The device for manufacturing a pouch case according to claim 12, **characterized in that**
the cup is formed in a rectangular shape, and the length of the side in the moving direction of the base material is longer than the length of the side in the width direction of the base material.

14. The device for manufacturing a pouch case according to claim 11, **characterized in that**
the edge forming part comprises:
a pair of first up-and-down rollers provided to form a convex portion recessed upward by pressurizing and rolling a first edge among both side edges of the base material; and
a pair of second up-and-down rollers provided to form a convex portion recessed upward by pressurizing and rolling a second edge among both side edges of the base material.

15. The device for manufacturing a pouch case according to claim 14, **characterized in that**
the pair of first rollers and the pair of second rollers are arranged so that they support both side edges of the base material in the width direction of the base material and guide moving of the base material from the cup forming part toward the cutting part.

16. The device for manufacturing a pouch case according to claim 15, **characterized in that**
the first roller and the second roller each comprise an upper roller having a first outer surface whose diameter decreases from one end to the other end along a central axis and a groove portion recessed along the circumferential direction of the first outer surface.

17. The device for manufacturing a pouch case according to claim 16, **characterized in that**
the first roller and the second roller each comprise a lower roller having a second outer surface whose diameter increases from one end to the other end along a central axis and a protrusion protruding convexly along the circumferential direction of the second outer surface and arranged to be insertable into the groove portion.

18. The device for manufacturing a pouch case according to claim 17, **characterized in that**
the groove portion has a semicircular cross-section having a predetermined curvature, and
the protrusion has a curvature smaller than the curvature of the groove portion and is arranged to be contactable with a part of the groove portion.

19. The device for manufacturing a pouch case according to claim 18, **characterized in that**
the upper roller has a truncated cone shape arranged so that the first outer surface is inclined within 10° to 20° with respect to the central axis.

20. The device for manufacturing a pouch case according to claim 19, **characterized in that**
the lower roller has a truncated cone shape arranged so that a second outer surface is contactable with the first outer surface.
